# EUROPEAN PATENT SPECIFICATION

(11) **EP 2 454 530 B1**
(45) Date of publication and mention of the grant of the patent: **02.09.2015**
(21) Application number: 10734348.5
(22) Date of filing: 01.07.2010
(51) Int. Cl.: F16K 24/04, F24D 19/08

(54) **DEVICE FOR VENTING A SYSTEM**
VORRICHTUNG ZUR BELÜFTUNG EINES SYSTEMS
DISPOSITIF PERMETTANT DE VENTILER UN SYSTÈME

(30) Priority: 17.07.2009 NL 2003227
(43) Date of publication of application: 23.05.2012
(73) Proprietor: Flamco B.V., 3751 LJ Bunschoten (NL)
(72) Inventor: CNOSSEN, Jan Henk, NL-8723 CP Koudum (NL)
(74) Representative: van Kooij, Adriaan
(86) International application number: PCT/NL2010/050413
(87) International publication number: WO 2011/008083

(56) References cited:
- GB-A- 2 392 226
- GB-A- 2 455 138
- US-A- 2 385 584
- US-B1- 6 315 212

## Description

The present invention relates to a device for venting a system, for instance a float-based venting device for a system, particularly a relatively or particularly hot system such as a system based on solar energy.

Formation of steam from the liquid medium can occur in hot systems. Dangerous situations can result here when the usual float vents are applied, many examples of which are known in the prior art.

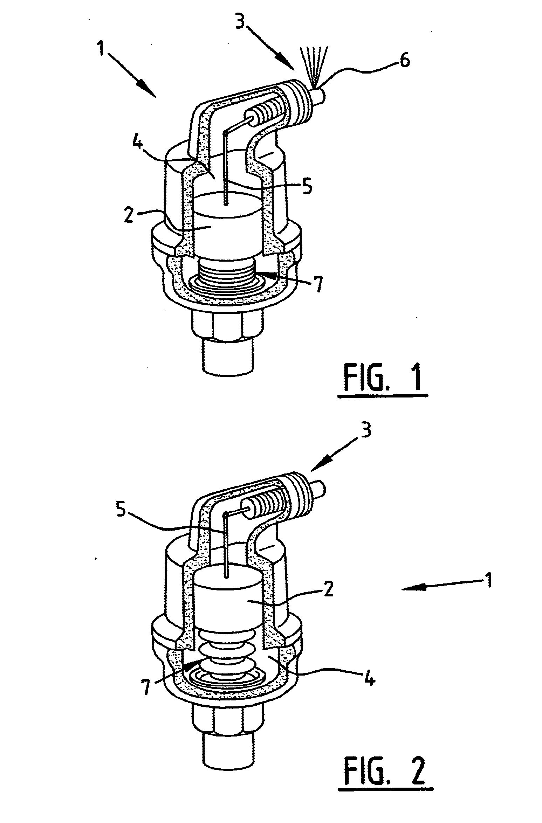

The operation of a float vent 1 shown by way of example in figures 1 and 2 is such that a valve 3 to a discharge channel 6 is opened as soon as sufficient gas has collected in a chamber 4 in float vent 1. A float 2 is arranged for this purpose in chamber 4 in float vent 1, float 2 being suspended from a float arm 5. When a liquid level falls the float 2 pulls on float arm 5, thereby opening valve 3, and therefore the outlet via discharge channel 6 for gas.

A great problem of such a known float vent 1 is however that in the float vent 1 of figures 1 and 2 based on float 2 no distinction can be made between steam or other gases. In other words, it is the case that, as soon as formation of steam occurs in the system and the steam reaches chamber 4 of float vent 1, valve 3 is opened in the above described manner and steam is thus discharged to the atmosphere via discharge channel 6. As a result of the local pressure drop in the system, in particular close to the float vent, even more steam will result and be released in the same manner. This is therefore an uncontrolled process, wherein hazardous situations can occur for people in the immediate vicinity of the float vent in particular or of the system in a broader sense. The system ceases to operate and damage to the system may also occur.

In order to avoid these situations it is generally required that a closing means be provided, which can be placed in chamber 4, discharge channel 6 or elsewhere in float vent 1. This solution can however be regarded as a drastic remedy since the float vent can hereby no longer fulfil its intended function of being able to vent a system without the intervention of a person.

In an attempt to solve this problem it is known to provide the float vent with a mechanism 7 which, in response to a (too) high temperature, displaces the float, particularly tilts it upward, such that arm 5 acts on valve 3 in order to close discharge channel 6. Such a mechanism 7 could, by way of example, comprise bimetal rings 8 which, upon reaching a critical temperature (see figure below), deform in order to displace the float in said manner.

It is also known that glycol or any other antifreeze agent is frequently added in such systems to the heat transfer liquid, usually water, in order to prevent damage to the system resulting from freezing of the liquid. Under the influence of inter alia glycol there can be contamination in, at or of valve 3 as a result of deposition of inter alia glycol, lime or other residues, which can occur in the form of dried matter and/or crystallization, or in any other way. This problem is usually exacerbated particularly as a result of the high temperature in chamber 4, also the float housing. The materials used in float vent 1 are often also not or insufficiently able to withstand the high temperatures.

Due to contamination and/or malfunction it may occur that valve 3 no longer seals. As a result there remains a risk that not gas but steam formed from the heat transfer liquid is blown off through float vent 1 (with danger to bystanders).

The closest prior art in relation to the present invention is acknowledged as being disclosed in GB-2455138, relative to which at least the features in the characterizing portion of the appended independent claims are novel.

The present invention has for its object to obviate or at least reduce the drawbacks, and in some cases even risks, of the known art, for which purpose a device and a method according to the present invention have all the features of the invention contributing thereto, as defined in the appended claims, in particular the independent claims, which relate to the device and the method according to the invention.

By not acting on the float, as is known in the prior art, but closing off the float chamber from the system in the case that a combination of pressure and/or temperature prevails in the system which results in the formation of steam from or evaporation of heat transfer liquid in the system, such steam or vapour can be prevented in very effective manner from escaping via the discharge channel in uncontrolled manner, and at the same time the protective means is much less sensitive, or even insensitive, to residues and deposits or dried matter which could impede the operation thereof, since the protective means is arranged at a position which it is anticipated will seldom, and more probably never, be without heat transfer liquid (go dry).

In a preferred embodiment of the invention the device has the feature that the closing means comprises a stop valve and detection means acting on the stop valve. At a temperature and pressure prevailing in the system at which formation of steam or vapour occurs, the stop valve can thus be employed in reliable manner to separate the float chamber from the system.

Preferably, though not exclusively, the detection means can then comprise a bellows which is adapted to act on the stop valve, at a combination of pressure and temperature critical for formation of steam from the heat transfer liquid, in order to separate the float chamber from the system. Such a bellows is an extremely reliable embodiment of a detection means.

A transmission is then preferably, though not exclusively, arranged between the detection means and the stop valve. Such a transmission can be considered an extremely reliable mechanical embodiment for enabling closing of the stop valve with certainty when the detection means have detected the conditions in which formation of steam and/or vapour can occur.

In an embodiment with the transmission, this transmission can comprise a plunger. Such an embodiment of a transmission is rigid and substantially mechanical, wherein the operation thereof is extremely reliable.

In a preferred embodiment of the invention the device has the feature that the closing means comprises pressure-equalizing means. The closing means is closed once said conditions of pressure and temperature have occurred. When these conditions have improved, the device must then resume normal operation. The pressure-equalizing means serve to make the pressure in the float chamber equal to that in the system so that the closing means can reopen without a higher pressure in the system counteracting this.

In an embodiment with a stop valve and pressure-equalizing means it is advantageous for the pressure-equalizing means to comprise a closable passage in a valve body of the stop valve. The passage can thus have a much smaller diameter than the stop valve itself, and the action of the pressure-equalizing means against the counterpressure in the system can still be realized in efficient and reliable manner. Additionally or alternatively, the pressure-equalizing means can comprise a selectively closable bypass channel along the closing means.

In an embodiment with a transmission (or even a plunger) and with pressure-equalizing means (or even a passage in a valve body of the stop valve) the device can have the further feature that the transmission acts on the pressure-equalizing means in order to open the stop valve counter to a higher pressure in the system relative to the pressure in at least the float chamber. The closing means can thus reopen reliably and resume normal operation.

In a preferred embodiment of the invention the device has the feature that an additional chamber is arranged between the float chamber and the connection. With such a chamber between the float chamber and the system, the temperature of liquid, vapour or steam entering the additional chamber can already be reduced before it reaches the float chamber. Such an additional chamber will thus usually suffice to return the steam and vapour to a liquid phase in order to enhance the operation of the device on the basis of the float alone.

In an embodiment with an additional chamber the device can have the further feature that the closing means is arranged between the additional chamber and the system. The device can then still allow escape via the discharge channel of only a quantity of steam or vapour which corresponds to the combined volume of the float chamber and the additional chamber. Owing to this volume being greater than the volume of the float chamber alone, cooling of the vapour or steam therein is enhanced still further, as is the opportunity to set the float into operation in the float chamber so as to close the discharge channel, after which normal operation can be resumed.

In a preferred embodiment of the invention the device has the feature that it further comprises: cooling means which are thermally connected to at least the float chamber. The above stated cooling action can hereby be further enhanced. By way of example, a cooling body with cooling fins or cooling ribs can be employed.

It is further possible here for the device according to the invention to have the feature that the cooling means are arranged in, on or at the additional chamber. Vapour and steam can thus be returned to the liquid phase before reaching the float chamber as a result of the cooling, preferably in combination with or further enhanced by the pressure decrease resulting from closing of the closing means.

It is noted that another aspect with which the present invention deals relates to a method.

An embodiment of the present invention will be described hereinbelow by way of example, and not by way of limitation, with reference to the accompanying figures, in which the same or similar parts, components and aspects are designated with the same reference numerals, and in which:
Figures 1 and 2 show a variant of a prior art device in different operating positions thereof; and
Figures 3-8 show an embodiment of a device according to the invention, likewise in different operating positions thereof.

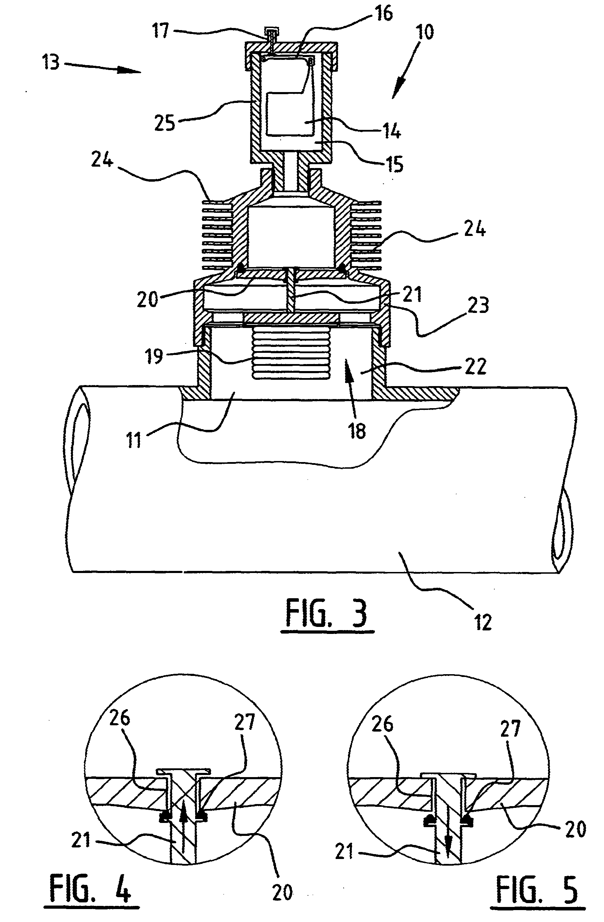

Figure 3 shows an embodiment of a vent 10 shown as embodiment of a device according to the present invention. Vent 10 comprises a connection 11 for connecting to a tube 12 (or other component) of a system. Vent 10 further comprises a float vent 13 with a float 14 in a float chamber 15, wherein float 14 is coupled to an arm 16 for the purpose of leaving clear or closing a discharge channel 17. Float vent 13 functions in per se known manner and a detailed description thereof can be dispensed with here.

A closing means 18 is arranged at connection 11. Closing means 18 comprises detection means in the form of bellows 19 and a stop valve 20. Bellows 19 acts on stop valve 20 via a transmission in the form of a plunger 21.

The formation of steam or vapour in the system of which tube 12 forms part is related to pressure and temperature of the heat transfer liquid, particularly water, optionally with an additive such as glycol. Bellows 19 is applied in vent 10. Such bellows are per se known from the technical field of thermostats in automobile engineering. It lies well within the usual capabilities of the skilled person to design such a bellows 19 such that, without any inventive activity of his own, bellows 19 is sensitive to temperature and/or pressure in the sense that it can act via plunger 21 on stop valve 20 to cause closing thereof when a pressure and/or temperature which (may) result in formation of steam or vapour begin to occur or are already occurring in the system. Bellows 19 thus moves plunger 21 at the temperature and pressure critical for formation of steam.

Such a bellows 19 is for instance filled with an accurately selected or composed medium or an expanding agent (not shown) so as to expand at said critical temperature and/or pressure of steam or vapour formation in order to move plunger 21 to the position in which it closes the stop valve. When the critical temperature and/or pressure is passed, the medium or expanding agent will usually transpose for this purpose from a solid or liquid phase with a small volume to the other of a solid or liquid phase, and then with a large or at least larger volume.

Particularly, though not exclusively, in such an embodiment of a bellows, or in another embodiment of a detection means, it can be advantageous to provide a counter-element, such as a spring (not shown), on the side of stop valve 20 lying opposite bellows 19 or any other similar member driving plunger 21. Such a counter-spring can enhance the opening of stop valve 20, for instance when the medium in bellows 19 returns to its initial state with more difficulty than it enters the expanded state, but also to overcome a small residual pressure difference which may occur despite the opening of passage 26 (see below).

Mounted on the outer end of plunger 21 is valve 20, which can completely close the access from the system to float vent 13. This is described below with reference to the other figures.

The closing means is arranged in an additional chamber 22 in a valve housing part 23. Cooling means formed as cooling fins or ribs 24 are arranged on the outer side of valve housing part 23. Additionally or alternatively, housing part 25 with float chamber 15 therein can also be provided on its outer side with cooling fins. Cooling means are thus formed and provided whereby the temperature in float chamber 15 will always be lower than the temperature of the heat transfer liquid in the system.

A passage 26 is arranged in the valve body of stop valve 20. Plunger 21 protrudes partially into passage 26. A valve seal 27 is further arranged therearound. This combination of passage 26, plunger 21 and valve seal 27 serves as pressure equalizer to enable opening of the (large) stop valve 20 despite a pressure difference (see figure 4) below and above the valve. When the pressure P1 in the system, i.e. below stop valve 20, has a higher pressure than the pressure P2 in the space thereabove, particularly in float chamber 15, bellows 19 is at least still always able to open passage 26 with plunger 21 therein, mainly on the basis of the smaller diameter of the passage relative to the periphery of stop valve 20. This pressure-equalizing valve 21, 26, 27 remains closed in the closing direction as long as bellows 19 lies against valve seal 27 via plunger 21. This can particularly be a rubber seal. If the pressure P1 in system 12 is equal to this pressure in float vent 13, plunger 21 is freely moveable in passage 26, as is shown in figure 5. The spring referred to above but not shown, which can act on stop valve 20 on the side thereof opposite bellows 19, can also contribute toward release of stop valve 20 once the pressure and/or temperature in the system have fallen sufficiently again to also enable a normal operation of vent 10.

Housing 23 of stop valve 20 is embodied with cooling means in the form of cooling fins or ribs 24. Cooling ribs 24 are arranged on the outer side, while (the material of) housing 23 itself transmits the least possible heat to float vent 13. It is possible to opt for a housing 23 of stainless steel since stainless steel transmits relatively little heat.

While the liquid in the space above stop valve 20 cools, bellows 19 remains in contact with the heat transfer liquid in the system via connection 11. When conditions allow, bellows 19 will act on stop valve 20 via the float in order to first equalize the pressures above and below the stop valve and then reopen stop valve 20.

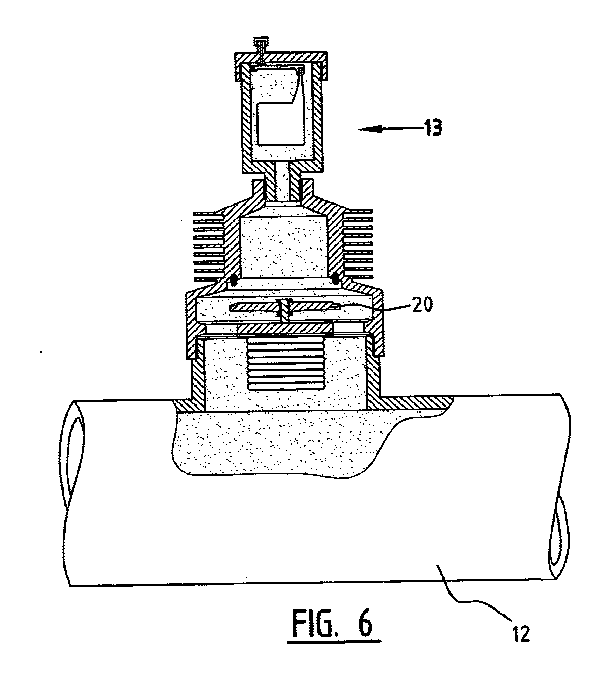

For the purpose of elucidating the operation of the float vent according to the invention, figures 6-8 show several operating modes of the device according to the invention.

In figure 6 stop valve 20 is open and the passage from system 12 to float vent 13 is clear. There is no gas present in system 12 and float vent 13 is closed.

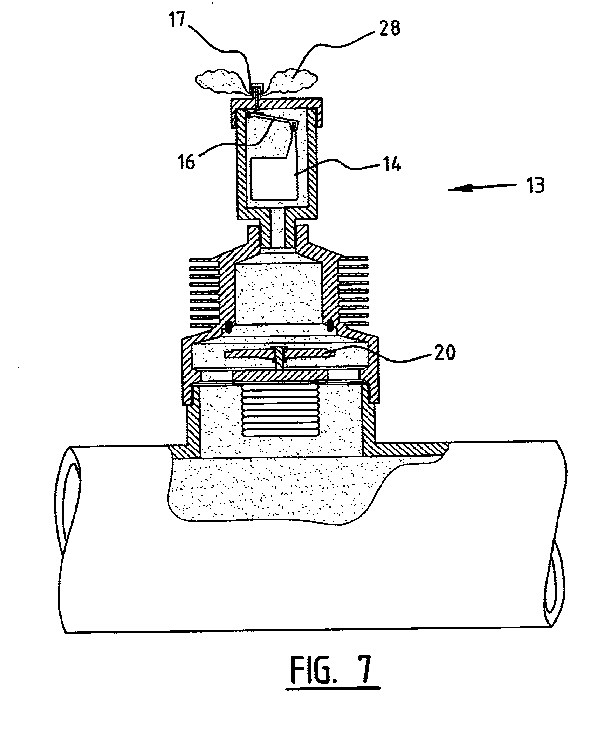

In figure 7 stop valve 20 is likewise opened, although there is now gas in system 12. Float 14 leaves discharge channel 17 clear via the arm for the purpose of discharging gas 28.

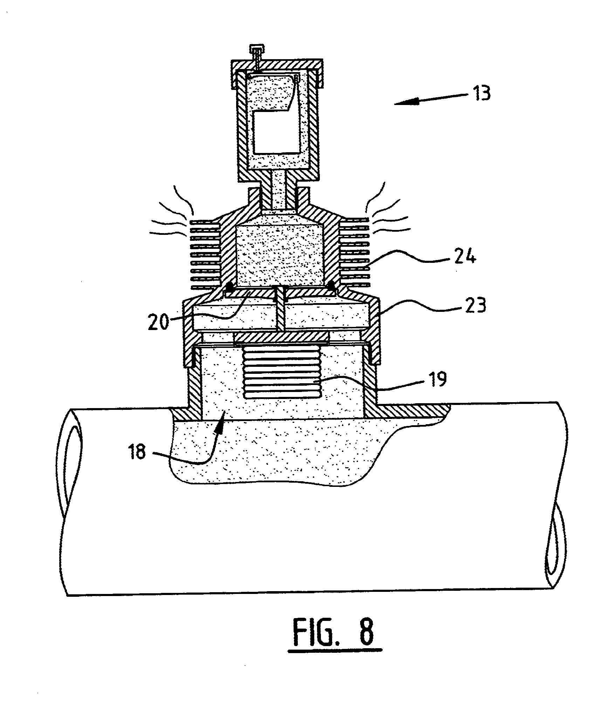

In figure 8 stop valve 20 of closing means 18 is closed under the influence of bellows 19, which situation has occurred or resulted once the pressure and/or temperature in system 12 have exceeded a critical value at which formation of steam or vapour can or will occur. The liquid in system 12 has become too hot to allow safe venting.

Because housing 23 of stop valve 20 is embodied with cooling fins 24, float vent 13 remains relatively cool and closed.

After examination of the above description of a possible embodiment with reference to the accompanying figures, to which the invention is by no means limited, many alternative and additional embodiments will occur to the skilled person, all of which must be deemed embodiments of the invention to the extent these variants comply with the definitions in the claims, either literally or in that the same objectives are sought therein with the same or similar means. An additional chamber 22 in an intermediate housing 23 can thus be omitted, and cooling fins can then possibly be provided on housing 25 of float vent 13. Passage 26 can be replaced by a bypass channel along stop valve 20 through the wall of housing 23. Cooling fins can be omitted and the length of intermediate housing 23 can be extended relative to the proportions shown in the figures to already enable a perhaps sufficient cooling of liquid which has become steam or vapour.

The material of housing 23 can conversely have good heat-conducting properties, although a thermal insulator between housings 23 and 25 is then desirable, if not essential.

## Claims

1. Device (10) for degassing a system with a heat transfer liquid, comprising:
- a float vent (13) with a float (14) arranged in a float chamber (15) and a discharge channel (17) from the float chamber (15);
- a connection (11) for connecting the float chamber (15) to the system (12); and
- a protective means against allowing escape via the discharge channel of an excess of heat transfer liquid in the form of steam, **characterized in that**
- the protective means comprises a closing means (18) sensitive to temperature and/or pressure which selectively closes off the float chamber (15) from the system (12).

2. Device as claimed in claim 1, wherein the closing means (18) comprises a stop valve (20) and detection means acting on the stop valve (20).

3. Device as claimed in claim 2, wherein the detection means comprise a bellows (19) which is adapted to act on the stop valve (20), at a combination of pressure and temperature critical for formation of steam from the heat transfer liquid, in order to separate the float chamber (15) from the system (12).

4. Device as claimed in claim 2 or 3, wherein a transmission is arranged between the detection means and the stop valve (20).

5. Device as claimed in claim 4, wherein the transmission comprises a plunger (21).

6. Device as claimed in at least one of the foregoing claims, wherein the closing means (18) comprises pressure-equalizing means.

7. Device as claimed in claims 2 and 6, wherein the pressure-equalizing means comprise a closable passage (26) in a valve body of the stop valve (20).

8. Device as claimed in claim 4 or 5 and claim 6 or 7, wherein the transmission acts on the pressure-equalizing means in order to open the stop valve (20) counter to a higher pressure in the system (12) relative to the pressure in at least the float chamber (15).

9. Device as claimed in at least one of the foregoing claims, wherein an additional chamber (22) is arranged between the float chamber (15) and the connection (11).

10. Device as claimed in claim 9, wherein the closing means is arranged between the additional chamber (22) and the system (12).

11. Device as claimed in at least one of the foregoing claims, further comprising cooling means (24) which are thermally connected to at least the float chamber (15).

12. Device as claimed in claim 9 or 10 and claim 11, wherein the cooling means (24) are arranged in, on or at the additional chamber (22).

13. Method for degassing a heat transfer liquid in a system, comprising of:
- providing a float chamber with a float therein and with a discharge channel from the float chamber, which float chamber is via a connection to the system; and
- providing a protective means against allowing escape via the discharge channel of an excess of heat transfer liquid in the form of steam,
**characterized in that**
- providing the protective means comprises of: closing off at least the float chamber from the system selectively and on the basis of a temperature and/or pressure prevailing in the system.

## Patentansprüche

1. Vorrichtung (10) zum Entgasen eines Systems mit einer Wärmeübertragungsflüssigkeit, aufweisend:
- einen Schwimmerentlüfter (13) mit einem Schwimmer (14), welcher in einer Schwimmerkammer (15) angeordnet ist, und einem Auslasskanal (17) von der Schwimmerkammer (15) aus,
- eine Verbindung (11) zum Verbinden der Schwimmerkammer (15) mit dem System (12), und
- ein Schutzmittel gegen ein Erlauben eines Entweichens, über den Auslasskanal, eines Überschusses an Wärmeübertragungsflüssigkeit in der Form von Dampf,
**dadurch gekennzeichnet, dass**
- das Schutzmittel ein temperatur- und/oder druckempfindliches Schließmittel (18) aufweist, welches die Schwimmerkammer (15) selektiv von dem System (12) absperrt.

2. Vorrichtung wie in Anspruch 1 beansprucht, wobei das Schließmittel (18) ein Sperrventil (20) und Detektionsmittel aufweist, welche auf das Sperrventil (20) wirken.

3. Vorrichtung wie in Anspruch 2 beansprucht, wobei die Detektionsmittel einen Balg (19) aufweisen, welcher dazu eingerichtet ist, bei einer Kombination von Druck und Temperatur, welche für die Bildung von Dampf aus der Wärmeübertragungsflüssigkeit kritisch ist, auf das Sperrventil (20) zu wirken, um die Schwimmerkammer (15) von dem System (12) abzutrennen.

4. Vorrichtung wie in Anspruch 2 oder 3 beansprucht, wobei eine Übertragungseinrichtung zwischen dem Detektionsmittel und dem Sperrventil (20) angeordnet ist.

5. Vorrichtung wie in Anspruch 4 beansprucht, wobei die Übertragungseinrichtung ein Druckstück (21) aufweist.

6. Vorrichtung wie in wenigstens einem der vorhergehenden Ansprüche beansprucht, wobei das Schließmittel (18) Druckausgleichsmittel aufweist.

7. Vorrichtung wie in Ansprüchen 2 und 6 beansprucht, wobei die Druckausgleichsmittel einen verschließbaren Kanal (26) in einem Ventilkörper des Sperrventils (20) aufweisen.

8. Vorrichtung wie in Anspruch 4 oder 5 und Anspruch 6 oder 7 beansprucht, wobei die Übertragungseinrichtung auf die Druckausgleichsmittel wirkt, um das Sperrventil (20) entgegen einem höheren Druck in dem System (12) bezüglich des Drucks in wenigstens der Schwimmerkammer (15) zu öffnen.

9. Vorrichtung wie in wenigstens einem der vorhergehenden Ansprüche beansprucht, wobei eine zusätzliche Kammer (22) zwischen der Schwimmerkammer (15) und der Verbindung (11) angeordnet ist.

10. Vorrichtung wie in Anspruch 9 beansprucht, wobei das Schließmittel zwischen der zusätzlichen Kammer (22) und dem System (12) angeordnet ist.

11. Vorrichtung wie in wenigstens einem der vorhergehenden Ansprüche beansprucht, ferner aufweisend Kühlungsmittel (24), welche mit wenigstens der Schwimmerkammer (15) thermisch verbunden sind.

12. Vorrichtung wie in Anspruch 9 oder 10 und Anspruch 11 beansprucht, wobei die Kühlungsmittel (24) in, auf oder an der zusätzlichen Kammer (22) angeordnet sind.

13. Verfahren zum Entgasen einer Wärmeübertragungsflüssigkeit in einem System, aufweisend:
- Bereitstellen einer Schwimmerkammer mit einem Schwimmer darin und mit einem Auslasskanal von der Schwimmerkammer aus, welche Schwimmerkammer über eine Verbindung mit dem System vorliegt, und
- Bereitstellen eines Schutzmittels gegen ein Erlauben eines Entweichens, über den Auslasskanal, eines Überschusses an Wärmeübertragungsflüssigkeit in der Form von Dampf, **dadurch gekennzeichnet, dass**
- das Bereitstellen des Schutzmittels aufweist: Absperren, selektiv und auf Basis einer Temperatur und/oder eines Drucks, welche in dem System vorherrschen, von wenigstens der Schwimmerkammer von dem System

## Revendications

1. Dispositif (10) destiné à dégazer un système qui comprend un liquide de transmission de chaleur, comprenant :
- un évent à flotteur (13) avec un flotteur (14) agencé dans une chambre de flotteur (15) et un canal d'évacuation (17) à partir de la chambre de flotteur (15) ;
- une connexion (11) destinée à connecter la chambre de flotteur (15) au système (12) ; et
- des moyens de protection qui empêchent l'échappement par le canal d'évacuation d'un excès de liquide de transmission de chaleur sous la forme de vapeur ;
**caractérisé en ce que** :
- les moyens de protection comprennent des moyens de fermeture (18) sensibles à une température et/ou à une pression, qui ferment de manière sélective la chambre de flotteur (15) du système (12).

2. Dispositif selon la revendication 1, dans lequel les moyens de fermeture (18) comprennent une soupape d'arrêt (20) et des moyens de détection qui agissent sur la soupape d'arrêt (20).

3. Dispositif selon la revendication 2, dans lequel les moyens de détection comprennent un soufflet (19) qui est adapté de façon à agir sur la soupape d'arrêt (20), selon la combinaison d'une pression et d'une température critiques vis-à-vis de la formation de vapeur à partir du liquide de transmission de chaleur, de manière à séparer la chambre de flotteur (15) du système (12).

4. Dispositif selon la revendication 2 ou la revendication 3, dans lequel une transmission est agencée entre les moyens de détection et la soupape d'arrêt (20).

5. Dispositif selon la revendication 4, dans lequel la transmission comprend un plongeur (21).

6. Dispositif selon l'une quelconque des revendications précédentes, dans lequel les moyens de fermeture (18) comprennent des moyens d'équilibrage de pression.

7. Dispositif selon les revendications 2 et 6, dans lequel les moyens d'équilibrage de pression comprennent un passage qui peut être fermé (26) dans un corps de soupape de la soupape d'arrêt (20).

8. Le dispositif selon la revendication 4 ou la revendication 5 et selon la revendication 6 ou la revendication 7, dans lequel la transmission agit sur les moyens d'équilibrage de pression de façon à ouvrir la soupape d'arrêt (20) à l'encontre d'une pression dans le système (12) qui est plus élevée que la pression dans la chambre de flotteur (15) au moins.

9. Dispositif selon l'une quelconque des revendications précédentes, dans lequel une chambre supplémentaire (22) est agencée entre la chambre de flotteur (15) et la connexion (11).

10. Dispositif selon la revendication 9, dans lequel les moyens de fermeture sont agencés entre la chambre supplémentaire (22) et le système (12).

11. Dispositif selon l'une quelconque des revendications précédentes, comprenant en outre des moyens de refroidissement (24) qui sont connectés de manière thermique au moins à la chambre de flotteur (15).

12. Dispositif selon la revendication 9 ou la revendication 10 et selon la revendication 11, dans lequel les moyens de refroidissement (24) sont agencés dans, sur, ou au niveau de, la chambre supplémentaire (22).

13. Procédé destiné à dégazer un liquide de transmission de chaleur dans un système, comprenant les étapes consistant à :
- fournir une chambre de flotteur avec un flotteur à l'intérieur et avec un canal d'évacuation à partir de la chambre de flotteur, laquelle chambre de flotteur est connectée au système ; et
- fournir des moyens de protection qui empêchent l'échappement par le canal d'évacuation d'un excès de liquide de transmission de chaleur sous la forme de vapeur ;
**caractérisé par** une étape consistant à :
- fournir des moyens de protection destinés à fermer au moins la chambre de flotteur vis-à-vis du système de manière sélective et sur la base d'une température et/ou d'une pression qui règnent dans le système.
